# EUROPÄISCHE PATENTANMELDUNG

(11) **EP 1 028 304 A1**
(43) Veröffentlichungstag der Anmeldung: **16.08.2000**
(21) Anmeldenummer: 99102561.0
(22) Anmeldetag: 11.02.1999
(51) Int. Cl.: G01B 11/04

(54) **Kamerabasiertes Messsystem zur Längenmessung**

(71) Anmelder: Dr. Noll GmbH, 67824 Feilbingert (DE)
(72) Erfinder: Noll, Albrecht, 67824 Feilbingert (DE); Paltian, Markus, 57072 Siegen (DE); Suhr, Hartwig, Dr., 55596 Schlossböckelheim (DE)

(57) **Zusammenfassung**

Die Erfindung betrifft ein kamerabasiertes Meßsystem zur Bestimmung von Objektlängen oder Kantenabständen innerhalb des Meßobjekts.

2 Flächenkameras nehmen simultan die relevanten Bereiche (Enden) des zu vermessenden Objekts auf. Aus der Helligkeits- und Strukturverteilung im Bild werden die Objektkanten mittels einer Auswerteeinheit bestimmt. Es können neben den Außenkanten auch innenliegende Kanten des Objekts erkannt werden. Durch geeignete Beleuchtungen wird unter Ausnutzung der Reflexionseigenschaften des Meßobjekts und durch Einsatz von Gegenlicht die Erkennung der Objektkanten verbessert.

## Beschreibung

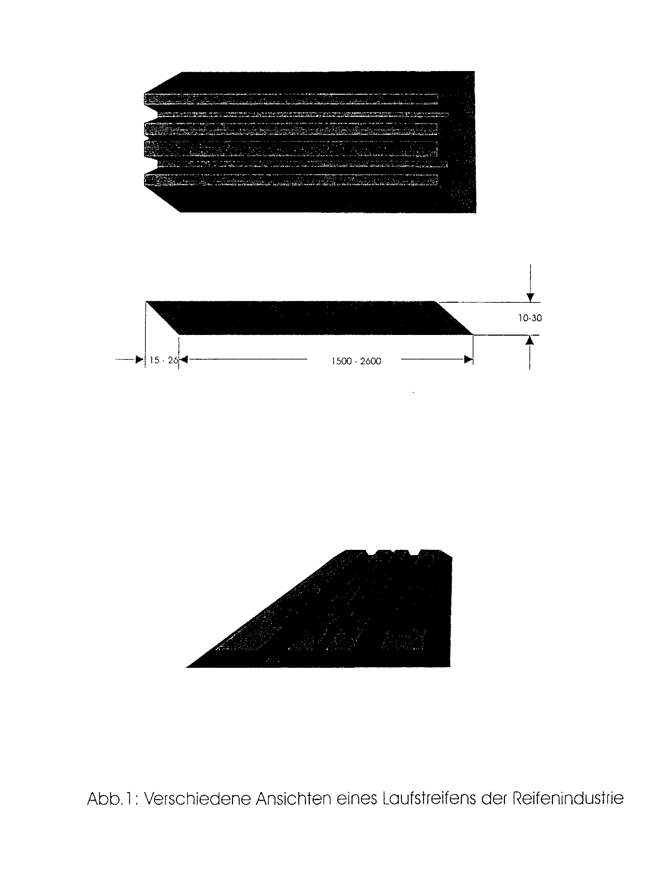

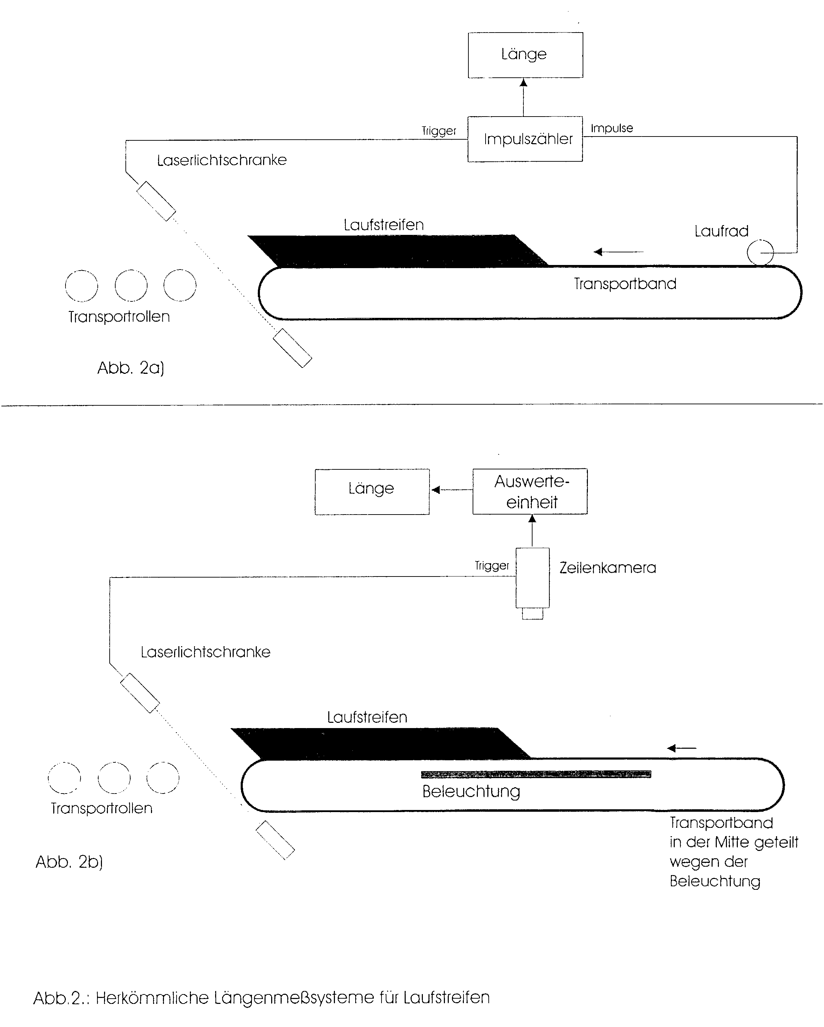

Die Erfindung betrifft ein Meßsystem zur Längenmessung an Objekten, die sich mit einer Geschwindigkeit zwischen 0 und 70m/min in Meßrichtung bewegen. Das System besteht aus 2 Flächenkameras, die gleichzeitig die Enden des Meßobjektes aufnehmen. Eine Auswerteeinheit ermittelt aus den aufgenommenen Helligkeilsverteilungen im Kamerabild die Objektkanten. Die zur Längenbestimmung benutzte Kante kann dabei auch innerhalb des Objekts liegen. Die Bildaufnahme erfolgt synchron an beiden Kameras.
Das System gehört zu den berührungslos messenden Systemen und wird zur automatischen Längemnessung eingesetzt. Insbesondere kann es z.B. in der Gummi- und Reifenindustrie eingesetzt werden, um an schräg geschnittenen Kautschukstreifen die Länge zu vermessen und die Schneideinrichtung zu kontrollieren und zu regeln.
In der Reifenindustrie müssen z.B. schräg geschnittene Laufstreifen (s. Abb. 1) auf die korrekte Länge kontrolliert werden. um den Aufbau des Reifens fehlerfrei ausführen zu können
Bisherige Verfahren setzten z.B. eine Zeilenkamera plus Lichtschrankenauslöser (s. Abb. 2b) oder eine Lichtschranke plus Laufrad (s. Abb. 2a) ein, wobei das Meßobjekt auf einem Transportband bewegt wird. Das Transportband muß für die Messung nach Abb. 2b in der Mitte geteilt sein um den Laufstreifen von unten beleuchten zu können. Beide Systeme unterliegen zahlreichen Fehlereinflüssen:
1) Am Laufstreifen wird nur an einer Querposition die Länge gemessen, singuläre Effekte beeinflussen das Meßergebnis.
2) Vertikale Bewegungen des Laufstreifens führen zu einem verspäteten Auslösen der Lichtschranke.
3) Schlupfeffekte des Transportbandes führen bei Verwendung des Laufrades zu Meßfehlern.

Die Längenmessung mittels der Erfindung unterliegt keiner dieser Fehlereinflüsse.
Die Erfindung nimmt gleichzeitig mit zwei Flächenkameras jeweils ein Bild von beiden Objektenden auf Zur Objektkantenermittlung wird nicht nur, wie bei den bisherigen Verfahren, ein Meßpunkt, sondern ein Bildausschnitt herangezogen. Dadurch kann eine Vielzahl von Meßpunkten zur Objektkantendetektion verwendet, werden. Singuläre Effekte am Meßobjekt rühren somit nicht zu Meßfehlern. Die Gleichzeitigkeit der Bildaufnahme beider Objektenden verhindert den Einfluß zeitlicher Effekte wie z.B. Schlupf oder Schwankungen des Triggerzeitpunktes.

Die Erfindung ist in der Lage im Objekt liegende Strukturen bei der Längenmessung zu berücksichtigen. Die erkennbaren Strukturen sind Übergänge zwischen zwei Objektbereichen unterschiedlicher Helligkeit oder Strukturbeschaffenheit (Helligkeitsverteilung). Durch geeignete Beleuchtung (Auflicht, seitliche Beleuchtung usw.) und Kameraanordnung (oberhalb oder unterhalb des Meßobjekts) kann je nach Meßobjekt der Strukturübergang hervorgehoben werden.
Zur Erkennung der Strukturübergänge (Kanten) werden verschiedene Filteralgorithmen durchgerührt, die auf eine Helligkeitsveränderung im Bild reagieren.

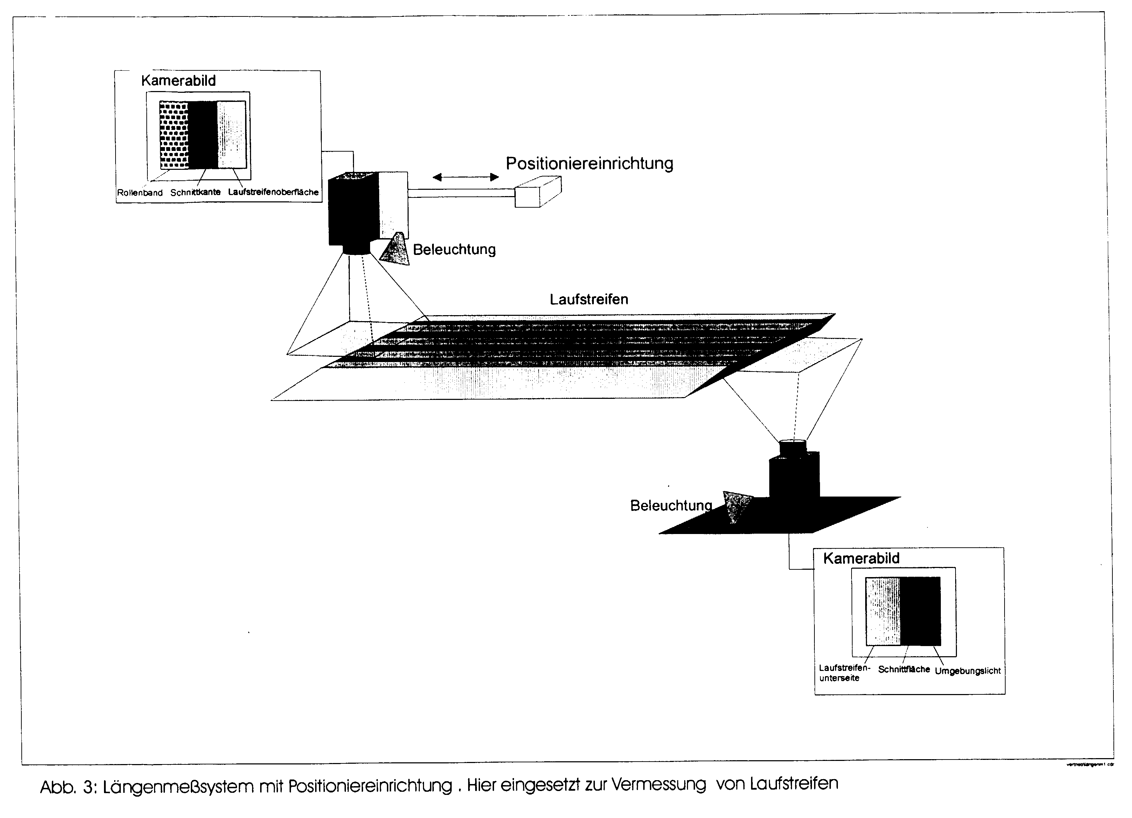

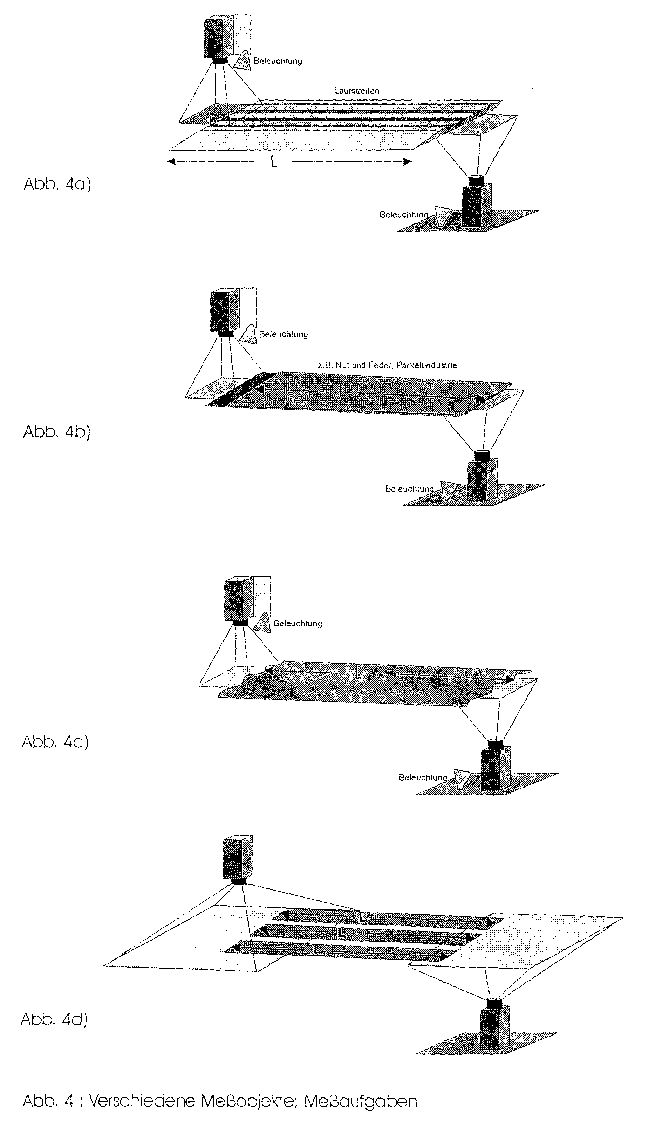

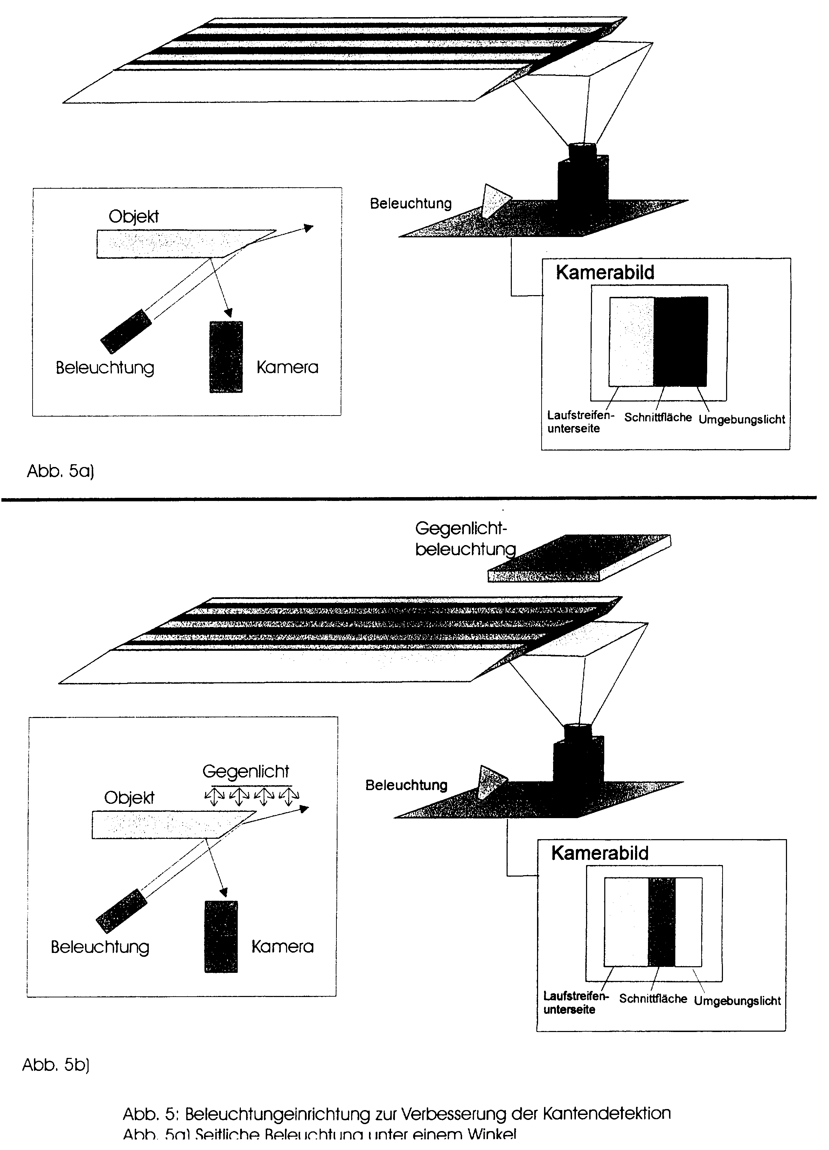

Die Erfindung ist somit in der Lage z.B. beim Laufstreifen. den Übergang der Schnittfläche zur Unterseite in einem Kamerabild und den Übergang vom Laufstreifenende zum Transportband im anderen Kamerabild zu erkennen(s. Abb. 3). Die Erfindung ermittelt in den beiden Kamerabildern Kanten (Strukturübergänge). Je nach Meßaufgabe bestimmen unterschiedliche Kanten die zu messende Länge.
Zur Bestimmung der Gesamtlänge des Meßobjekts ist es notwendig den Abstand der Kameras zu einander und das Abbildungsverhältnis im Kamerabild zu kennen. Über einen geeigneten Kalibrierstab lassen sich der Gesamtabstand und die Kameraabbildung genau ermitteln.
Eine Auswerteeinheit ermittelt die Gesamtlänge aus den ermittelten Kalibrierdaten und den definierten Objektkanten, die zur Längenermittlung verwendet werden sollen.
Am Beispiel des Laufstreifens. sind die relevanten Kanten zum einen der Strukturübergang RollenbandSchnittfläche im oberen Kamerabild (s. Abb.3. links oben) sowie der Strukturübergang LaufsireifenunterseiteSchnittfläche im unteren Kamerabild (s. Abb. 3, rechts unten). Der Abstand dieser beiden Kanten ergibt die Laufstreifenlänge. Der Abstand der Kanten errechnet sich aus den Kantenpositionen in den Einzelbildern, dazu ist die Kenntnis des Abbildungsverhältnisses notwendig, und dem Abstand der Kameras (Einzelbilder) zueinander.
Die Auswertung erfolgt mit einer Rechnereinheit oder einer geeigneten Analogsignakerarbeitungseinheit.

Zur Anpassung des Systems an Objektlängen die in unterschiedlichen Chargen um mehr als die Aufnahmegröße (abgebildete Gegenstalldsgröße) der Kamera schwanken, kann eine Kameraeinheit an einer Lineareinheit befestigt werden, wodurch die Kameradistanz auf die erwartete Sollänge des Objekts eingestellt werden kann (s. Abb. 3).
Durch die Moglichkeit die. Belichtungszeit der Kameras in einem weiten Rahmen zu variieren, können Objektgeschwindigkeiten von bis zu 75m/min. toleriert werden, ohne einen Einfluß auf die Meßgenauigkeit des Systems zu erhalten.
Abb. 3 zeigt ein Komplettsystem für die Vermessung der Länge von Laufstreifen. Die untere Kamera ist fest positioniert und kann durch eine geeignete Öffnung ein Bild von der Laufstreifenunterseite aufnehmen. Die obere Kamera ist positionierbar und nimmt das Laufstreifenende auf einem Rollenband auf.

## Patentansprüche

1. Meßsystem, basierend auf zwei Matrixkameras, zur Messung der Länge von bewegten oder ruhenden Objekten durch simultane Aufnahme beider Objektenden und Kantendetektion im Kamerasignal. Die Kameraaufnahme wird durch ein Triggersignal ausgelöst.

2. Verfahren nach Anspruch 1, dadurch gekennzeichnet, daß das Meßobjekt in Meßrichtung schräg geschnittene Objektkanten aufweist (Abb. 4a) und zur Längenbestimmung innenliegende Objektkanten herangezogen werden müssen.

3. Verfahren nach Anspruch 1, dadurch gekennzeichnet, daß das Meßobjekt in Meßrichtung innenliegende Objektkanten aufweist (Abb.4b) die zur Langenbestimmung herangezogen werden müssen.

4. Verfahren nach Anspruch 1, dadurch gekennzeichnet, daß das Meßobjekt in Längs- oder Querrichtung eine speziell geformte Schnittkante aufweist (Abb. 4c), die bei der Längenbestimmung berücksichtigt werden muß.

5. Verfahren nach Anspruch 1, dadurch gekennzeichnet, daß mehrere zu vermessende Objekte parallel zueinander bewegt werden. (Abb. 4d)

6. Verfahren nach Anspruch 1 2, 3, 4 oder 5 dadurch gekennzeichnet, daß eine manuell oder motorgetriebene Lineareinheit eine Kameraposition an unterschiedliche Objektlängen anpaßt.

7. Verfahren nach Anspruch 1,2,3,4,5 oder 6, dadurch gekennzeichnet, daß die Meßwenataufnahme nicht durch ein Triggersignal ausgelöst wird, sondern durch ständig wiederkehrende gleichzeitige Bildaufnahmen beider Kameras automatisch festgestellt wird wann sich das Meßobjekt mit den zu vermessenden Strukturübergängen in den Kamerabildern befindet.

8. Verfahren nach Anspruch 1 bis 7 gekennzeichnet dadurch, daß die Objektstruktur im Bildbereich einer oder beider Kameras durch eine Hochfrequenz-Beleuchtung, die unter einem Winkel zur Kamera angeordnet ist (s. Abb. 5a), die zur Längeinbestimmung relevanten Kanten, durch Ausnützung der Reflexionseigenschaften des Objekts, stärker hervorhebt.

9. Verfahren entsprechend Anspruch 8 gekennzeichnet dadurch, daß eine der Kamera gegenüberliegende Beleuchtung die Ermittlung der Objektkanten verbessert (s. Abb. 5b).
